# EUROPÄISCHE PATENTSCHRIFT

(11) **EP 3 534 031 B1**
(45) Veröffentlichungstag und Bekanntmachung des Hinweises auf die Patenterteilung: **09.12.2020**
(21) Anmeldenummer: 19159577.6
(22) Anmeldetag: 27.02.2019
(51) Int. Cl.: F16D 65/38, F16D 65/40, F16D 65/52, F16D 65/56

(54) **NACHSTELLVORRICHTUNG FÜR EINE SCHEIBENBREMSE**
ADJUSTER DEVICE FOR A DISC BRAKE
DISPOSITIF DE RÉGLAGE POUR UN FREIN À DISQUE

(30) Priorität: 28.02.2018 DE 102018104569
(43) Veröffentlichungstag der Anmeldung: 04.09.2019
(73) Patentinhaber: KNORR-BREMSE Systeme für Nutzfahrzeuge GmbH, 80809 München (DE)
(72) Erfinder: MOLNAR, Markus, 94081 Fürstenzell (DE); KRENN, Daniel, 94154 Neukirchen vorm Wald (DE)

(56) Entgegenhaltungen:
- CN-U- 203 655 982
- DE-A1-102008 035 367
- DE-A1-102013 016 884
- US-A1- 2017 159 734

## Beschreibung

Die Erfindung betrifft eine Nachstellvorrichtung für eine Scheibenbremse nach dem Oberbegriff des Anspruchs 1.

Nachstellvorrichtungen für Scheibenbremsen, insbesondere pneumatisch betätigte in Schiebesattelausführung sind hinlänglich bekannt, beispielsweise aus der CN 203 655 982 U, aus der DE 10 2013016 884 A1, sowie aus der DE 10 2008 036 034 A1.

Die Nachstellvorrichtung dient dem Ausgleich einer verschleißbedingten Änderung des Lüftspiels, d.h. des Spaltes zwischen einem Bremsbelag und einer Bremsscheibe, wobei die Nachstellvorrichtung im Innern einer Gewindehülse angeordnet ist, die als Bremsstempel fungiert und die in einer beim Bremsen in Richtung der Bremsscheibe verschiebbaren Brücke der Scheibenbremse verdrehbar gehalten ist.

Um die Rüttelstabilität des Nachstellers gewährleisten zu können, sind verschiedene Halteeinrichtungen vorgesehen. Diese Einrichtungen sind vor, während und nach Betätigung der Bremse wirksam.

Eine solche Halteeinrichtung wird durch eine Reibscheibe gebildet, mit beidseitigen Reibflächen, an denen einerseits ein Radialbündchen einer verdrehbaren Spindel der Nachstellvorrichtung und andererseits eine darauf geführte Kugelscheibe mit ihrer planen Fläche anliegen.

Dieser planen Fläche gegenüberliegend ist die Kugelscheibe als Kugelabschnitt ausgebildet, der in einer angepassten Mulde einer mit dem Bremssattel verdrehsicher verbundenen Lagerscheibe einliegt.

Probleme können sich dann ergeben, wenn die Reibpaarungen Reibscheibe/Radialbündchen und Reibscheibe/Kugelscheibe vor Ablauf der geforderten Lebensdauer funktionsuntauglich werden, so dass die Funktionssicherheit der Scheibenbremse insgesamt nicht gewährleistet ist.

Dabei sind die Reibmomente der Reibpaarungen definiert, durch eine entsprechende Auswahl an Materialien und Beschichtungen.

Der Erfindung liegt die Aufgabe zugrunde, eine Nachstellvorrichtung der gattungsgemäßen Art so weiterzuentwickeln, dass ihre Funktionssicherheit verbessert wird.

Diese Aufgabe wird durch eine Nachstellvorrichtung mit den Merkmalen des Anspruchs 1 sowie des Anspruchs 9 gelöst.

Durch die Erfindung ist eine redundante Funktionssicherheit geschaffen, die bei Funktionsversagen mindestens einer der Reibpaarungen Reibscheibe/Radialbündchen oder Reibscheibe/Kugelscheibe wirksam wird. Diese Reibpaarungen bilden sozusagen eine primäre Reibebene, während die Reibpaarung Kugelscheibe/Lagerscheibe, gemäß der Erfindung ebenfalls mit einem definierten Reibmoment, eine sekundäre Reibebene bildet.

Als besonders vorteilhaft hinsichtlich der Reibflächen haben sich folgende Materialwahlen bzw. Beschichtungen gezeigt, um den entsprechenden tribologischen Anforderungen in optimaler Weise gerecht zu werden:

| | |
|---|---|
| Spindel: | Mangan phosphatiert, und vergütet |
| Konservierung: | beölt |
| Reibscheibe: | korundgestrahlt |
| Beschichtung: | Molybdänsulfid |
| Kugelscheibe: | Material Polyphenylensulfid (PPS) definierter Glasfaseranteil im Material spezieller Gleitschleifprozess bei der Herstellung |
| Lagerscheibe: | gestrahlt mit definierter Rautiefe |

Nach einem weiteren Gedanken der Erfindung gemäß Anspruch 1 ist die Reibscheibe mit dem Radialbündchen oder der Kugelscheibe verdrehsicher verbunden.

Damit wird eine Reduzierung der Reibebenen erreicht, wodurch sich die Konditionierdauer bei der Vorfertigung des Nachstellers verkürzt und die Prozessfähigkeit der Konditionierung erheblich gesteigert wird.

Überdies wird verhindert, dass die Funktionsfähigkeit des Nachstellers während der Konditionierung fälschlicherweise als nicht ausreichend bewertet wird und quasi zu einem Ausschuss führt. Dabei wird das Drehmomentniveau vermeintlich nicht erreicht, was sich jedoch während der nachfolgenden Bremsenmontage als Fehlbewertung herausstellt, da die Reibmomente sehr wohl das gewünschte Niveau erreichen.

Die konkrete Ausgestaltung der verdrehsicheren Verbindung zwischen der Reibscheibe und dem Radialbündchen oder der Kugelscheibe kann stoffschlüssig, formschlüssig oder kraftschlüssig erfolgen.

Eine formschlüssige Verbindung der Reibscheibe mit der Kugelscheibe kann, wie nach einem weiteren Gedanken der Erfindung vorgesehen, dadurch erfolgen, dass die Reibscheibe mindestens eine abgewinkelte Lasche aufweist, die in eine angepasste Ausnehmung der Kugelscheibe eingreift. Dabei kann die Verbindung sowohl in radialer wie auch in axialer Richtung erfolgen.

In diesem Fall ist die Reibpaarung Reibscheibe/Radialbündchen mit definiertem Reibmoment die primäre Reibebene, während die Reibpaarung Kugelscheibe/Lagerscheibe die redundante Reibebene bildet, die dann in Funktion tritt, wenn die primäre Reibebene versagt.

Alternativ zu der vorgenannten Ausführungsvariante wird die Reibscheibe mit dem Radialbündchen verbunden in der Form, dass die Radialscheibe mit mindestens einer abgewinkelten Lasche oder einem Haken in eine angepasste Ausnehmung des Radialbündchens greift, wobei auch hier die Fixierung axial und/oder radial ausgeführt sein kann.

Die primäre Reibebene wird hierbei durch die Reibpaarung Reibscheibe/Kugelscheibe gebildet, während die redundante Reibebene, ebenso wie in der vorbeschriebenen ersten Ausführungsvariante, durch die Reibpaarung Kugelscheibe/Lagerscheibe gebildet wird.

Eine weitere Lösung der Aufgabe besteht darin, dass ein Passscheibensystem, das sich einerseits mit einem definierten Reibungskoeffizienten an der Stirnseite einer Bundbuchse und andererseits an der zugeordneten Stirnseite einer Kegelbuchse ebenfalls mit einem definierten Reibungskoeffizienten abstützt, aus mindestens zwei aufeinander liegenden Passscheiben besteht, die mit ihren Kontaktflächen eine Reibpaarung mit einem definierten Reibmoment bilden. Diese Schnittstelle stellt eine weitere Halteeinrichtung dar. Das Verhältnis zwischen den beiden Halteeinrichtungen muss abgestimmt sein, damit die Nachstellerfunktion gewährleistet werden kann.

Aus dem Stand der Technik ist es bekannt das Passscheiben-System, bestehend aus lediglich einer Passscheibe, in seiner Dicke zu verändern, um das Haltemoment zur Begrenzung einer minimalen Nachstellbewegung einzustellen sowie das benötigte Spiel für einen Freilauf der Nachstellvorrichtung.

Durch die Erfindung ist sichergestellt, dass das definierte Reibmoment über die Lebensdauer der Nachstellvorrichtung eingehalten wird, ebenso die Haltefunktion der Nachstellvorrichtung und der Verschleiß an der Schnittstelle des Passscheiben-Systems minimiert wird.

Weiter sind durch die Erfindung mehrere Reibebenen geschaffen mit der Folge einer Redundanz, so dass im Falle eines Versagens einer Reibebene eine andere Reibebene die Funktion übernimmt. Allerdings sind hierfür entsprechende tribologische Eigenschaften der beteiligten Bauteile zwingend.

So bilden die Reibpaarungen Bundbuchse und zugeordnete, d.h. anliegende Passscheibe einerseits und die Reibpaarung Kegelbuchse/anliegende Passscheibe andererseits, jeweils mit definiertem Reibmoment, primäre Reibebenen, während eine sekundäre Reibebene durch die Reibpaarung der aneinander liegenden Passscheiben gebildet wird, die erst dann funktional wirksam wird, wenn die primären Reibebenen versagen.

Hinsichtlich der optimierten tribologischen Eigenschaften sind folgende Materialien bzw. Beschichtungen besonders vorteilhaft.

### Reibebenen: Bundbuchse/Passscheibe:

### Beschichtung Passscheibe: DLC (Diamond-Like-Carbon)

Bundbuchse beölt/getränkt mit einem synthetischen Tränkfluid für Sintermetall-Gleitlager

Durch die Beölung/Tränkung der Bundbuchse wird ein zusätzlicher Verschleißschutz gewährleistet. Überdies versorgt die aus einem Sintermetall bestehende Bundbuchse die Reibstelle mit Öl, da das Öl durch die Poren des Sintermetalls abgegeben werden kann.

Schmierung mit einer Calciumhydroxid enthaltenden Paste.
Eigenschaften der Paste:
- besonders festhaftend
- widerstandsfähig gegen Auswaschen durch Wasser
- verhindert Festfressen
- sehr hoher Verschleißschutz und Druckbelastbarkeit

### Reibebene zwischen zwei Passscheiben:

Die Oberflächen werden bei der Montage weder beölt noch befettet, sondern sind definiert blank.

### Reibebene Passscheibe/Kegelbuchse:

Schmierung mit einer Calciumhydroxid enthaltenden Paste.
Passscheiben und Kegelbuchse blank mit definiertem Oberflächenzustand.

Weitere vorteilhafte Ausbildungen der Erfindungen sind in den Unteransprüchen gekennzeichnet.

Ausführungsbeispiele der Erfindungen werden nachfolgend anhand der beigefügten Zeichnungen beschrieben.

Es zeigen:
- Fig. 1: eine erfindungsgemäße Nachstellvorrichtung in einer geschnittenen Seitenansicht

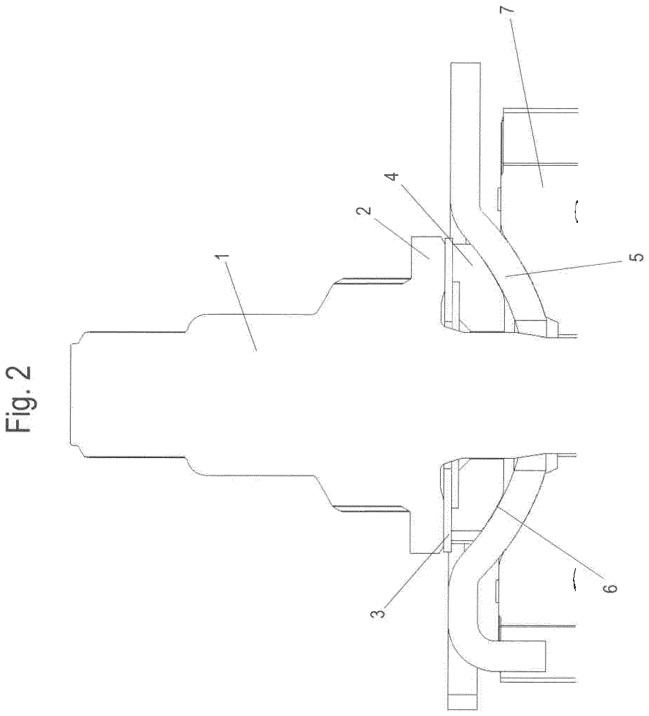

- Fig. 2: einen vergrößerten Ausschnitt der Nachstellvorrichtung gemäß der Fig. 1 ebenfalls in einer geschnittenen Seitenansicht
- Fig. 3: einen Teilausschnitt eines weiteren Ausführungsbeispiels der erfindungsgemäßen Nachstellvorrichtung in einer geschnittenen Seitenansicht
- Fig. 4: ein weiteres Ausführungsbeispiel der erfindungsgemäßen Nachstellvorrichtung in einem Teilausschnitt in einer geschnittenen Seitenansicht
- Fig. 5: einen Teilausschnitt einer weiteren Variante der Nachstellvorrichtung, gleichfalls in einer geschnittenen Seitenansicht.

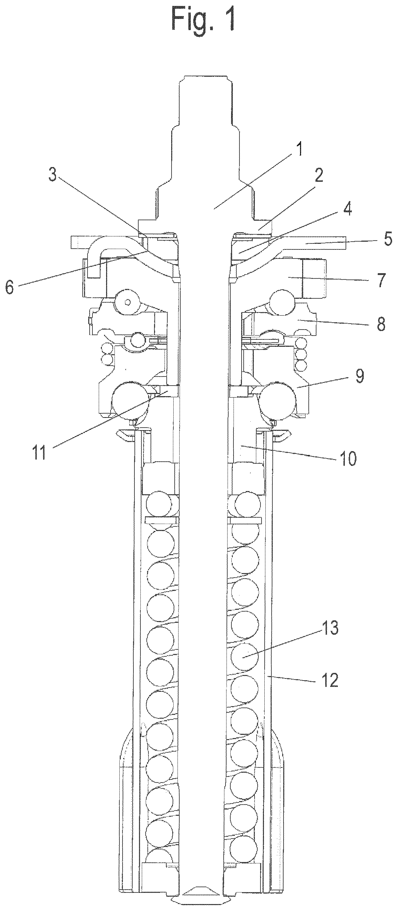

In der **Fig. 1** ist eine Nachstellvorrichtung dargestellt, mit einer Spindel 1, auf der eine Schraubenfeder 13 geführt ist, die in einer Federhülse 12 gehalten ist.

Die Nachstellvorrichtung insgesamt ist mittels einer Lagerscheibe 5 in montierter Stellung an einem nicht dargestellten Bremssattel einer Scheibenbremse festgelegt.

Die Lagerscheibe 5 greift in eine einen Laufring eines Axiallagers bildende Bundbuchse 7 ein, dessen anderer, gegenüberliegender Laufring 8, der eine Rampenscheibe für eine Kugelrampenkupplung bildet, mit einem Bremshebel in Wirkverbindung steht zur Nachstellung, d.h. zum Ausgleich einer verschleißbedingten Lüftspieländerung.

Die Lagerscheibe 5 ist auf ihrer der Bundbuchse 7 abgewandten Seite als kugelabschnittförmige Mulde ausgebildet, in der eine in ihrer Kontur daran angepasste Kugelscheibe 4 einliegt.

An der der kugelabschnittförmigen Mulde gegenüberliegenden Seite der Kugelscheibe 4 liegt eine Reibscheibe 3 mit einer Reibfläche an, an deren anderer Reibfläche sich ein Radialbündchen 2 der Spindel 1 abstützt, so dass die Kombination Kugelscheibe 4, Reibscheibe 3 und Radialbündchen 2 eine Überlastsicherung bilden.

Die Bundbuchse 7 stützt sich auf ihrer der Lagerscheibe 5 abgewandten Stirnseite an einem Passscheiben-System 11 ab, das auf einer einen Laufring für ein Axiallager bildende Kegelbuchse 10 aufliegt. Der andere Laufring wird durch einen Kupplungsring 9 gebildet, wobei das Axiallager Bestandteil einer Konuskupplung ist.

Gemäß der Erfindung nach Anspruch 1 sind die aneinander liegenden Kontaktflächen 6 der Kugelscheibe 4 und der Lagerscheibe 5 als Reibpaarung mit einem definierten Reibmoment ausgebildet, so dass sich insgesamt drei Reibebenen ergeben und zwar primäre Reibebenen zwischen der Reibscheibe 3 und dem Radialbündchen 2 sowie der Reibscheibe 3 und der Kugelscheibe 4 und eine Sekundärebene zwischen der Kugelscheibe 4 und der Lagerscheibe 5.

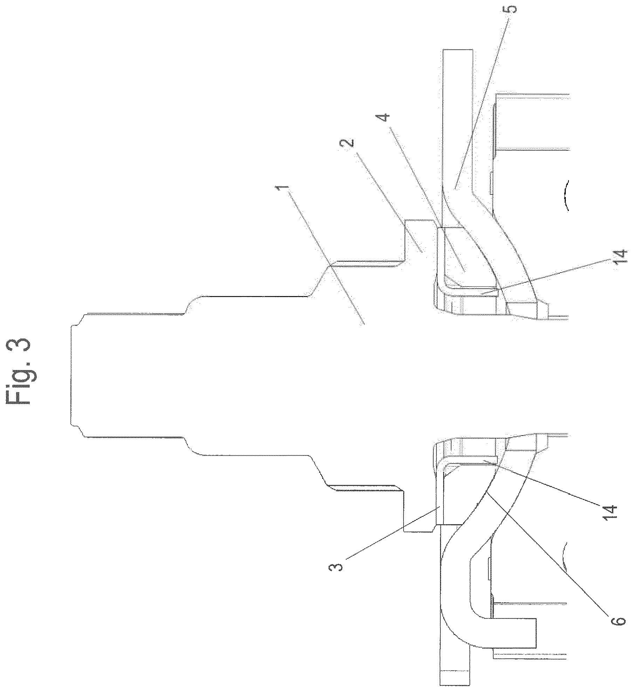

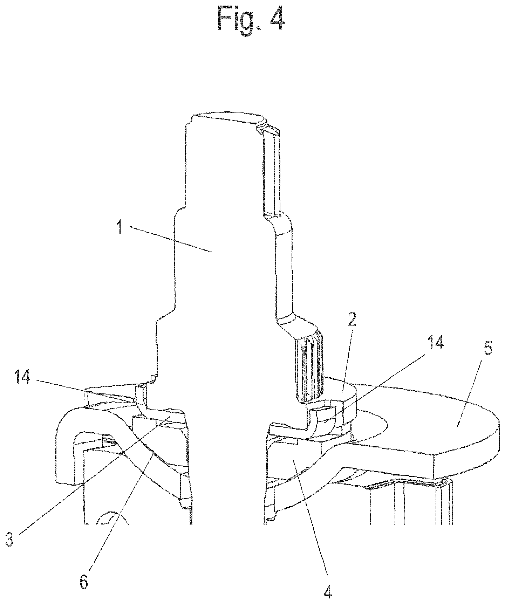

In den **Fig. 3** **und** **4** sind jeweils eine weitere Variante der Erfindung nach Anspruch 1 dargestellt, bei der allerdings lediglich zwei Reibebenen gegeben sind.

Hierzu ist die Reibscheibe 3, gemäß Fig. 3, verdrehsicher mit der Kugelscheibe 4 verbunden, so dass sich die Primär-Reibebene ergibt im Kontaktbereich zwischen dem Radialbündchen 2 und der Reibscheibe 3. Die Sekundär-Reibebene ist gebildet durch die Reibpaarung Kugelscheibe 4 und Lagerscheibe 5 im Bereich der Kontaktflächen 6.

Zur Verdrehsicherung der Reibscheibe 3 an der Kugelscheibe 4 weist die Reibscheibe 3 im Beispiel zwei abgewinkelte Laschen 14 auf, die in entsprechende Ausnehmungen der Kugelscheibe 4 eingreifen, wobei auch eine axiale Sicherung vorgesehen sein kann.

Bei dem in der Fig. 4 gezeigten Beispiel wird die Primär-Reibebene gebildet durch die Reibpaarung zwischen der Kugelscheibe 4 und der Reibscheibe 3, während diese verdrehsicher mit dem Radialbündchen 2 verbunden ist, wozu ebenfalls abgewinkelte Laschen 14 an der Reibscheibe 3 angeformt sind, die in entsprechende Ausnehmungen des Radialbündchens 2 ragen.

Die Sekundär-Reibebene wird auch in diesem Beispiel gebildet durch die Reibpaarung Kugelscheibe 4 und Lagerscheibe 5.

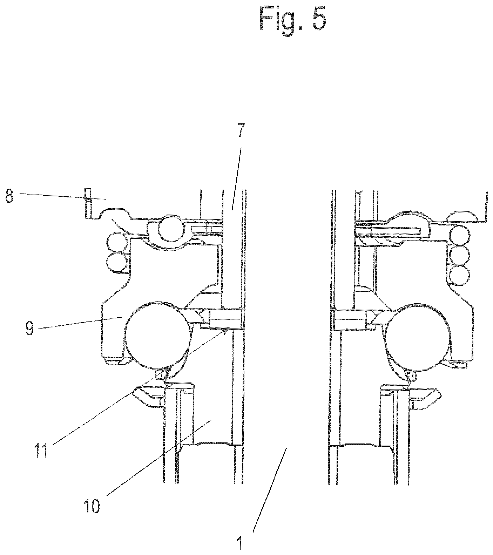

Die **Fig. 5** zeigt einen Ausschnitt der Nachstellvorrichtung im Bereich des Passscheiben-Systems 11, das, gemäß dem Anspruch 9 im Beispiel aus zwei aufeinander liegenden Passscheiben besteht, die mit ihren Kontaktflächen eine Reibpaarung bilden, wobei das Reibmoment definiert ist.

Die primären Reibebenen mit einem definierten Reibmoment werden hierbei gebildet durch die Reibpaarung Bundbuchse 7/anliegende Passscheibe und die Reibpaarung Kegelbuchse 10 und anliegende Passscheibe. Die sekundäre Reibebene wird durch die aneinander liegenden Passscheiben des Passscheiben-Systems 11 gebildet.

### BEZUGSZEICHENLISTE

- 1: Spindel
- 2: Radialbündchen
- 3: Reibscheibe
- 4: Kugelscheibe
- 5: Lagerscheibe
- 6: Kontaktflächen
- 7: Bundbuchse
- 8: Laufring
- 9: Kupplungsring
- 10: Kegelbuchse
- 11: Passscheiben-System
- 12: Federhülse
- 13: Schraubenfeder
- 14: Lasche

## Patentansprüche

1. Nachstellvorrichtung für eine Scheibenbremse zum Ausgleich einer verschleißbedingten Änderung eines Lüftspiels, mit einer ein Radialbündchen (2) aufweisenden verdrehbaren Spindel (1), einer an einem Bremssattel der Scheibenbremse befestigbaren, eine als Kugelabschnitt ausgebildete Mulde aufweisenden Lagerscheibe (5) und einer darin gelagerten Kugelscheibe (4), wobei zwischen der Kugelscheibe (4) und dem Radialbündchen (2) eine jeweils mit einer Reibfläche anliegende Reibscheibe (3) unter Bildung einer Reibpaarung mit definiertem Reibmoment angeordnet ist,
**dadurch gekennzeichnet, dass**
die aneinander liegenden Kontaktflächen (6) der Kugelscheibe (4) und der Lagerscheibe (5) als Reibpaarung mit einem definierten Reibmoment ausgebildet sind.

2. Nachstellvorrichtung nach Anspruch 1,
**dadurch gekennzeichnet, dass**
die Reibscheibe (3) mit dem Radialbündchen (2) oder der Kugelscheibe (4) verdrehsicher durch Stoff-, Kraft- oder Reibschluss verbunden ist.

3. Nachstellvorrichtung nach Anspruch 1 oder 2,
**dadurch gekennzeichnet, dass**
zur formschlüssigen Verbindung die Reibscheibe (3) und das Radialbündchen (2) oder die Kugelscheibe (4) miteinander korrespondierende Sicherungsmittel aufweisen.

4. Nachstellvorrichtung nach einem der vorhergehenden Ansprüche,
**dadurch gekennzeichnet, dass**
die Reibscheibe (3) mindestens eine abgewinkelte Lasche (14) oder einen Haken aufweist, die in eine angepasste Ausnehmung des Radialbündchens (2) oder der Kugelscheibe (4) eingreift.

5. Nachstellvorrichtung nach einem der vorhergehenden Ansprüche,
**dadurch gekennzeichnet, dass**
die Spindel (1) zumindest im Bereich des Radialbündchens (2) manganphosphatiert, zur Konservierung beölt und/oder vergütet ist.

6. Nachstellvorrichtung nach einem der vorhergehenden Ansprüche,
**dadurch gekennzeichnet, dass**
die Reibscheibe (3) korundgestrahlt ist und mit einem Molybdänsulfid beschichtet ist.

7. Nachstellvorrichtung nach einem der vorhergehenden Ansprüche,
**dadurch gekennzeichnet, dass**
die Kugelscheibe (4) aus Polyphenylensulfid (PPS) mit einem definierten Glasfaseranteil besteht.

8. Nachstellvorrichtung nach einem der vorhergehenden Ansprüche,
**dadurch gekennzeichnet, dass**
die Lagerscheibe (5) durch Strahlen aufgeraut ist.

9. Nachstellvorrichtung nach Anspruch 1 oder nach dem Oberbegriff des Anspruchs 1, wobei die Lagerscheibe (5) in einer auf der Spindel (1) geführten Bundbuchse (7) einliegt, an deren gegenüberliegenden Stirnseite ein Passscheiben-System (11) mit einem definierten Reibmoment anliegt, das sich andererseits an der zugeordneten Stirnseite einer Kegelbuchse (10), ebenfalls mit einem definierten Reibmoment abstützt,
**dadurch gekennzeichnet, dass**
das Passscheiben-System (11) aus mindestens zwei aufeinander liegenden Passscheiben besteht, die mit ihren aneinander liegenden Kontaktflächen eine Reibpaarung bilden.

10. Nachstellvorrichtung nach Anspruch 9,
**dadurch gekennzeichnet, dass**
die Passscheiben mit DLC (Diamond-Like-Carbon) beschichtet sind.

11. Nachstellvorrichtung nach Anspruch 9,
**dadurch gekennzeichnet, dass**
die Bundbuchse (7) beölt ist mit einem synthetischen Tränkfluid für Sintermetall-Gleitlager.

12. Nachstellvorrichtung nach Anspruch 9 oder 10,
**dadurch gekennzeichnet, dass**
die an der zugeordnete Passscheibe anliegende Kontaktfläche der Bundbuchse (7) mit einer Calciumhydroxid enthaltenden Paste beschichtet ist.

13. Nachstellvorrichtung nach einem der Ansprüche 9-11,
**dadurch gekennzeichnet, dass**
die aneinander liegenden Kontaktflächen der Kegelbuchse (10) und der zugeordneten Passscheibe mit einer Calciumhydroxid enthaltenden Paste versehen sind.

14. Nachstellvorrichtung nach einem der Ansprüche 9-11,
**dadurch gekennzeichnet, dass**
die Passscheiben sowie die zugeordnete Stirnseite der Kegelbuchse (10) eine blanke Oberfläche aufweisen.

## Claims

1. Adjusting device for a disc brake to compensate for a wear-related change of a clearance, comprising a rotatable spindle (1) having a radial collar (2), a bearing disc (5) capable of being secured to a brake calliper of the disc brake and having a trough designed as a spherical segment, and a spherical washer (4) mounted therein, wherein a friction disc (3) abutting with a friction surface each is arranged between the spherical washer (4) and the radial collar (2) while forming a friction pairing with a defined friction moment,
**characterised in that**
the adjacent contact surfaces (6) of the spherical washer (4) and the bearing disc (5) are designed as a friction pairing with a defined friction moment.

2. Adjusting device according to claim 1,
**characterised in that**
the friction disc (3) is non-rotatably joined to the radial collar (2) or to the spherical washer (4) by adhesive force, non-positively or frictionally.

3. Adjusting device according to claim 1 or 2,
**characterised in that**
the friction disc (3) and the radial collar (2) or the spherical washer (4) have mutually corresponding securing means for a positive connection.

4. Adjusting device according to any of the preceding claims,
**characterised in that**
the friction disc (3) has at least one angled lug (14) or a hook, which engages with a matching recess of the radial collar (2) or the spherical washer (4).

5. Adjusting device according to any of the preceding claims,
**characterised in that**
the spindle is manganese phosphated, oiled for conservation and/or hardened and tempered at least in the region of the radial collar (2).

6. Adjusting device according to any of the preceding claims,
**characterised in that**
the friction disc (3) is corundum blasted and coated with a molybdenum sulphide.

7. Adjusting device according to any of the preceding claims,
**characterised in that**
the spherical washer (4) consists of polyphenylene sulphide (PPS) with a defined proportion of glass fibre.

8. Adjusting device according to any of the preceding claims,
**characterised in that**
the bearing disc (5) is roughened by blasting.

9. Adjusting device according to claim 1 or to the preamble of claim 1, wherein the bearing disc (5) lies in a flange bushing (7), which is guided on the spindle (1) and at the opposite end face of which there is provided a shim ring system (11) with a defined friction moment, the other side of which is supported on the associated end face of a conical sleeve (10) likewise having a defined friction moment,
**characterised in that**
the shim ring system (11) consists of at least two shim rings lying on top of each other and forming a friction pairing with their adjacent contact surfaces.

10. Adjusting device according to claim 9,
**characterised in that**
the shim rings are coated with DLC (diamond-like carbon).

11. Adjusting device according to claim 9,
**characterised in that**
the flange bushing (7) is oiled with a synthetic impregnating fluid for sintered metal plain bearings.

12. Adjusting device according to claim 9 or 10,
**characterised in that**
those contact surfaces of the flange bushing (7) which bear against the associated shim ring are coated with a paste containing calcium hydroxide.

13. Adjusting device according to any of claims 9 to 11,
**characterised in that**
the adjacent contact surfaces of the conical sleeve (10) and the associated shim ring are provided with a paste containing calcium hydroxide.

14. Adjusting device according to any of claims 9 to 11,
**characterised in that**
the shim rings and the associated end face of the conical sleeve (10) have a blank surface.

## Revendications

1. Dispositif de rattrapage pour un frein à disque, afin de compenser une variation due à l'usure d'un jeu des garnitures, comprenant une broche (1) tournante et ayant un rebord (2) radial, une rondelle (5) de palier pouvant être fixé à un étrier de frein du frein à disque et ayant une cavité constituée en partie de sphère et une rondelle (4) à portée sphérique, qui y est montée, dans lequel, entre la rondelle (4) à portée sphérique et le rebord (2) radial, est disposée une rondelle (3) de friction, s'appliquant, respectivement, par une surface de friction, avec formation d'un appariement de friction de couple de frictions défini,
**caractérisé en ce que**
les surfaces (6) de contact, appliquées l'une à l'autre de la rondelle (4) à portée sphérique et de la rondelle (5) de palier, sont constituée, comme appariement de friction ayant un couple de frictions défini.

2. Dispositif de rattrapage suivant la revendication 1,
**caractérisé en ce que**
la rondelle (3) de friction est reliée, sans possibilité de tourner, par coopération de matière, de force ou de friction, au rebord (2) radial ou à la rondelle (4) à portée sphérique.

3. Dispositif de rattrapage suivant la revendication 1 ou 2,
**caractérisé en ce que**,
pour la liaison à complémentarité de forme, la rondelle (3) de friction et le rebord (2) radial ou la rondelle (4) à portée sphérique ont des moyens d'assujettissement se correspondant entre eux.

4. Dispositif de rattrapage suivant l'une des revendications précédentes,
**caractérisé en ce que**
la rondelle (3) de friction a au moins une languette (14) coudée ou un crochet, qui pénètre dans un évidement adapté du rebord (2) radial ou de la rondelle (4) à portée sphérique.

5. Dispositif de rattrapage suivant l'une des revendications précédentes,
**caractérisé en ce que**
la broche (1) est, au moins dans la partie du rebord (2) radial, phosphatée au manganèse, huilée comme traitement préservatif et/ou trempée.

6. Dispositif de rattrapage suivant l'une des revendications précédente,
**caractérisé en ce que**
la rondelle (3) de friction est traitée par projection de corindon et est revêtue de sulfure de molybdène.

7. Dispositif de rattrapage suivant l'une des revendications précédentes,
**caractérisé en ce que**
la rondelle (4) à portée sphérique est en poly(sulfure de phénylène) (PPS) ayant une proportion de fibre de verre définie.

8. Dispositif de rattrapage suivant l'une des revendications précédentes,
**caractérisé en ce que**
la rondelle (5) de palier est rendue rugueuse par projection.

9. Dispositif de rattrapage suivant la revendication 1 ou suivant le préambule de la revendication 1, dans lequel la rondelle (5) de palier pénètre dans une douille (7) à collet guidée sur la broche (1), au côté frontal opposé de laquelle s'applique un système (11) de rondelle d'ajustement ayant un couple de frictions défini, qui s'appuie, pour sa part, sur le côté frontal associé d'une douille (10) conique, également avec un couple de frictions défini,
**caractérisé en ce que**
le système (11) de rondelle d'ajustement est constitué d'au moins deux rondelles d'ajustement s'appliquant l'une à l'autre, qui forment un appariement de friction par leurs surfaces de contact s'appliquant l'une à l'autre.

10. Dispositif de rattrapage suivant la revendication 9,
**caractérisé en ce que**
les rondelles d'ajustement sont revêtues de DLC (Diamond-Like-Carbon).

11. Dispositif de rattrapage suivant la revendication 9,
**caractérisé en ce que**
la douille (7) à collet est huilée par un fluide d'imprégnation synthétique pour palier lisse en métal fritté.

12. Dispositif de rattrapage suivant la revendication 9 ou 10,
**caractérisé en ce que**
les surfaces de contact, s'appliquant à la rondelle d'ajustement associée de la douille (7) à collet, sont revêtues d'une pâte contenant de l'hydroxyde de calcium.

13. Dispositif de rattrapage suivant l'une des revendications 9 à 11,
**caractérisé en ce que**
les surfaces de contact s'appliquant l'une à l'autre de la douille (10) conique et de la rondelle d'ajustement associée sont pourvues d'une pâte contenant de l'hydroxyde de calcium.

14. Dispositif de rattrapage suivant l'une des revendications 9 à 11,
**caractérisé en ce que**
les rondelles d'ajustement, ainsi que le côté frontal associé de la douille (10) conique, ont une surface vierge.
